# EUROPEAN PATENT SPECIFICATION

(11) **EP 3 762 699 B1**
(45) Date of publication and mention of the grant of the patent: **16.11.2022**
(21) Application number: 19710363.3
(22) Date of filing: 06.03.2019
(51) Int. Cl.: G01M 3/22, G01M 3/38

(54) **SYSTEM AND METHOD FOR DETERMINING THE INTEGRITY OF CONTAINERS**
SYSTEM UND VERFAHREN ZUR BESTIMMUNG DER INTEGRITÄT VON BEHÄLTERN
SYSTÈME ET PROCÉDÉ DE DÉTERMINATION DE L'INTÉGRITÉ DE RÉCIPIENTS

(30) Priority: 06.03.2018 SE 1850241
(43) Date of publication of application: 13.01.2021
(73) Proprietor: GasPorOx AB, 224 57 Lund (SE)
(72) Inventor: LUNDIN, Patrik, 241 62 Harlösa (SE); LEWANDER XU, Märta, 224 65 Lund (SE); SEBESTA, Mikael, 247 52 Dalby (SE)
(74) Representative: KIPA AB
(86) International application number: PCT/EP2019/055625
(87) International publication number: WO 2019/170784

(56) References cited:
- WO-A1-2016/156622
- US-A1- 2010 064 777

## Description

### BACKGROUND OF THE INVENTION

### Field of the Invention

This disclosure pertains to determine the integrity of closed containers by exposing the container to a decreased pressure and performing optical measurements of gas leakage from the inside of the container. The measurements include placing the container in an environment where the pressure is lower than inside the container so that gas from the inside of the container flows out through any potential leak. An optical gas measurement is performed outside the container, for detection of gas leakage. Especially, the disclosure relates to non-destructive leak testing of containers such as packages, bags, trays, bottles, jars, vials.

### Description of the Prior Art

Sealed containers are used in many fields of, e.g., packaging of food, pharmaceuticals, chemicals, etc. Tight containers are important to, e.g., prevent the content from leaking out; to prevent atmospheric gases or moisture to enter the container; and to prevent any pre-filled gas composition inside the container from changing. Further, the integrity of sealed containers may be important to ensure that biological agents such as viruses or bacteria do not enter and affect the product. The integrity of sealed containers may be insufficient, e.g. by faults in, or a non-optimal sealing process, deficiencies in the barrier materials, damage during the handling, and contents or other objects trapped in welding. Verification and validation of the integrity of sealed containers is thus important in many industrial situations. Verification and validation of the integrity of sealed container may often be referred to as leak-testing or similar, and many methods for this are known in the art.

Examples of leak-testing methods include manual inspection, which can be visual inspection of seams etc, listening after sounds indicating leaks, feeling the resistance of bags, smelling etc. Manual methods are, however, time consuming and can generally not identify small leaks.

Other known methods include automated vision systems to detect anomalies, but again this may not detect small leaks, and the method is limited to certain kinds of containers.

Mechanical force testing is also used where the resistance from, e.g., a flexible bag is automatically measured. However, this method is typically not suitable for detection of small leaks, and carries the risk of damaging the container.

Another common method is to submerge a container in water or another liquid and searching for bubbles escaping the container. This is often referred to as "bubble-test". Also, this method may be relatively time consuming and cannot detect very small leaks. The method is also to some extent intrusive as some containers may be damaged by the liquid. Some container types are also not suited for this type of test, as for example carton, as gas will escape the container material itself and thus hide true leaks.

Small leaks can be detected by penetration tests using dyes. The container may then, either as a whole, or cut out sections of it, be stained with dye on one side, and dye penetrating through the container material is indicating leaks. This method is, however, destructive and time consuming. In a similar manner, trace gases such as helium or hydrogen, may be used. The container may then be pre-filled with the trace gas and sealed, where after, e.g., a mass spectrometer is used to detect escaping trace gas. Using trace gases can provide a very sensitive detection finding small leaks, but it is relatively slow, and require filling of trace gases in special test containers, meaning that it can only be used on a small sub-sample of produced containers.

Another method is to subject the container to external variations in the outside atmosphere, e.g., by placing it in a (partial) vacuum chamber, or exerting overpressure on the container with atmospheric air or other gases, or combinations of these techniques. With this method, some additional means to detect a leak of a container is required, i.e., by controlling or measuring one or more parameters that may change as consequence of the variation in outside pressure or gas composition, if a leak is present. Several such techniques are known in the art. For example, transient pressure variation in the chamber may be recorded, and its behaviour may be indicative of a leak in the sample. Examples of such techniques can be referred to as "vacuum decay", "pressure decay", or similar. Examples of related methods can include placing the container in a vacuum chamber and observing any leakage of product substance (e.g. EP2989435B1).

Non-intrusive optical detection of gases inside packages for quality control is disclosed in patent EP 10720151.9 (Svanberg et al.). The principle of optical detection of the gas in the headspace of packages for the purpose of indicating leaks is known in the art. This method is based on that the gas inside the package may deviate from an assumed gas composition due to interaction with the surrounding atmosphere through the leak. However, in normal atmosphere, for small leaks, it may take a very long time before there is a detectable deviation of the gas composition inside a package, which makes the method impractical in many situations.

A faster determination of container integrity, based on optical measurements of the gas composition/pressure inside a sealed container, is covered by WO 2016/156622. Here the container is subjected to a surrounding with a forced change in gas concentration/pressure, thereby inducing a faster change inside the container if a leak is present, compared to the natural alternations observed in EP 10720151.9.

Another example is where a container with significant amounts of CO2 is placed in a vacuum chamber where a CO2 sensor of type NDIR (non-dispersive infra-red) is placed. A drawback of NDIR sensors is that they are relatively slow in detecting fast concentration changes.

US 2010/0064777 A1 discloses a leak detector adapted to detect a leak of a first material by detecting a change in a physical/chemical property of a second material.

There are situations where none of the methods previously described in the art are suitable for detecting a leak. One such example is for inline measurements where a fast detection of small leaks is essential, hence new improved apparatus and methods for detecting leaks in such containers would be advantageous.

### SUMMARY OF THE DISCLOSURE

Accordingly, embodiments of the present disclosure preferably seek to mitigate, alleviate or eliminate one or more deficiencies, disadvantages or issues in the art, such as the above-identified, singly or in any combination by providing a system or method according to the appended patent claims 1-14, with independent system claim 1 and independent method claim 2, for non-destructively determining the integrity of sealed containers by detection of gas leakage into an environment with lower pressure than inside the container. The optical sensor is based on detecting an absorption in spectra in a transmitted light signal by using Tunable diode laser absorption spectroscopy (TDLAS) technology.

In one example of the disclosure, the container containing the at least one gas may be pressurized and the surrounding environment may be at ambient pressure where at least one optical sensor detects if the level of the at least one gas is altered and thereby determine if the container may be leaking. According to the claimed invention, the container is placed in an environment, such as a chamber where a partial vacuum may be applied, thereby inducing a flow of the at least one gas through potential leaks. An optical sensor, based on TDLAS, is in this case transmitting a light beam, such as a laser beam, through the environment but outside of the container, such as a chamber or through a connected volume. In some aspects of the invention different means for ensuring that the leaked gas reaches the laser beam, to be detected by the optical sensor, may be applied. These means may include, but are not limited to, fans, circulation pumps or special designs of the pressure cycle created by the vacuum pump.

Some advantages of the disclosed systems and methods compared to known systems or methods, may be that the disclosed systems and methods could be faster and more sensitive in detecting leaks, due to the fast response time and high sensitivity of the TDLAS technique. The possibility of TDLAS to transmit a free beam through an open space close to the container is also superior in order to enable a fast detection, compared to, for example, NDIR which is used in an internal semi-enclosed gas cell which may have a slow response time. Another advantage with the enclosed systems and methods may be that the fast and sensitive detection of TDLAS can enable a detection of the position of the leak on the container, either through the timing of the detected alternation of the level of the at least one gas, or by using multiple detectors and/or transmitters placed at different positions around the container.

Other advantages of the disclosed systems and methods may be related to that the technique can be non-intrusive and fast, compared to for example "bubble tests" where the container is submerged in liquid, or mass spectrometer detection which is sensitive but slow and generally require specially filling the container with trace gases, for example hydrogen or helium. TDLAS has the advantage of being able to detect gases that are commonly used or present in container headspaces, for example carbon dioxide, oxygen, water vapor or methane. The nonintrusiveness of the disclosed systems and methods is further reducing waste and enabling testing of more containers.

The fast response time of TDLAS may also enable implementation of the enclosed systems and methods in inline production situations.

### BRIEF DESCRIPTION OF THE DRAWINGS

These and other aspects, features and advantages of which examples of the disclosure are capable of will be apparent and elucidated from the following description of examples of the present disclosure, reference being made to the accompanying drawings, in which:
Fig. 1 is illustrating an example , which does not fall within the scope of the claimed invention, where a pressurized container placed in an open environment where a laser beam is transmitted around the container and folded using semi-transparent mirrors. Multiple detectors are used in order to detect where on the container a potential leak is present.
Fig. 2 is illustrating a container placed in a chamber through which a laser beam is transmitted. In this example a vacuum pump is connected to the chamber in order to decrease the pressure in the chamber to a partial vacuum.
Fig. 3 is illustrating a container placed in a chamber through which a laser beam is transmitted and folded around the container using semi-transparent mirrors. Multiple detectors are used to detect where on the container a potential leak is present.
Fig. 4 is illustrating an example where the container is placed in a chamber connected to a measurement volume through which the laser beam is transmitted. A vacuum pump is decreasing the pressure in the chamber and connected measurement volume.
Fig. 5 is illustrating an example of a pressure cycle that may be used to force gas leaking out of a container, for example as positioned as in Fig. 4, to reach the laser beam to be detected. Included is also an example of how the resulting detected alternation of the gas concentration may behave for a leaker.
Fig. 6 is illustrating an example where the container is placed in a chamber which is connected to a measurement volume. A circulation pump is circulating the gas through the chamber and connected measurement volume.
Fig. 7 is illustrating an example where the container is placed in a chamber which is connected to a measurement volume. A vacuum pump is decreasing the pressure in the chamber and measurement volume. In this example, a valve is placed in the chamber to allow a flow of gas from the chamber to the measurement volume.
Fig. 8 is illustrating an example where the container is placed in a chamber which also contains a multi-pass cell in which the light travels a long path, enabling a sensitive detection.
Fig. 9 is illustrating an example where the container is placed in a chamber which is connected to a measurement volume consisting of a multi-pass cell. A pump is circulating the gas through the chamber and measurement volume.
Fig. 10 is illustrating a flow-chart over an exemplary method.

### DESCRIPTION OF EXAMPLES

Specific examples of the disclosure will now be described with reference to the accompanying drawings. This disclosure may, however, be embodied in many different forms and should not be construed as limited to the examples set forth herein; rather, these examples are provided so that this disclosure will be thorough and complete, and will fully convey the scope of the disclosure to those skilled in the art, as defined by the appended claims.

The following disclosure focuses on examples of the present disclosure applicable to determining the integrity of containers by placing a container with at least one gas in an environment with a lower absolute pressure than that inside the container, and measuring an alternated level of the at least one gas in the environment. The environment may be a closed enclosure, such as a closed chamber or closed holder. In some examples, the environment may be an at least partial open enclosure, such as a chamber or a holder with at least one open side. Additionally, in some examples, the container may be a pressurized container, such as a bottle, for example a bottle with carbonated beverage such as soda, or sparkling wine or beer. The container may also be a tray or a bag with at least one added gas with an absolute pressure higher than 1 atm. Alternatively, in some examples, the container may also be non-pressurized, for example a food tray, a non-pressurized beverage bottle or can, a bag, a carton-based container, a metal can, or a plastic based container etc. The container may even have an internal absolute gas pressure less than 1 atm. The headspace in the container contains the at least one gas detectable using an optical sensor. The optical sensor uses TDLAS, to detect the at least one gas. The at least one gas may be, for example carbon dioxide or oxygen. Both these gases are common in modified atmosphere packaging (MAP) which is used to prolong the shelf-life of, for example, food products. The at least one gas may also be, for example, water vapor, carbon monoxide or methane - gases which are also suitable to detect using TDLAS. The amount of alternation of the level of at least one gas in said environment may be used to determine the size of the leak in the container.

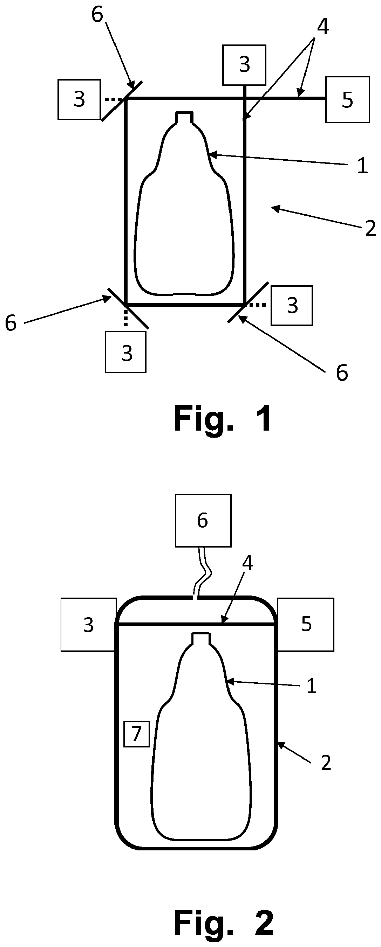

Fig. 1 is illustrating an example , which does not fall within the scope of the claimed invention, where a pressurized container is placed in an environment (2). In this example an optical transmitter (5) is transmitting a light beam (4) around the container (1). The light beam is reflected using semi-transparent mirrors (6) and is detected with several detectors (3). The use of several detectors enables information about the position of the leak on the container. In other examples the light beam may be transmitted directly from the transmitter to a detector. In other examples there may be more than one transmitter in combination with one or more detector. The light beam may also be shaped as, for example, a light sheet in order to cover a larger portion of the volume surrounding the container. The light beam may also be reflected around the container without the use of semi-transparent mirrors, but instead using a normal mirror, or another surfaces present in the environment of the container, or using reflections of the container material itself. Reflection geometries may also be used in order to allow better optical access or an increased detection sensitivity due to an elongated optical path.

The detected light may be analysed in a control unit for determining an alternated level of the at least one gas in the environment. The control unit may be a computer, a microprocessor or an electronic circuit that could run code, or a software configured for analysing the light detected by the detector.

Fig. 2 shows another example where the container (1) is placed in an environment (2), here illustrated as an enclosure, such as a chamber, which has a lower absolute gas pressure than that inside the container (1). If the container (1) is pressurized, the environment (2) may be at ambient pressure or it may have a partial vacuum. In this example a vacuum pump (6) is connected to the environment (2) in order to create a partial vacuum. An optical transmitter (5) transmits a light beam (4) through the environment (2), and the light beam (4) is detected with a detector (3). The light is transmitted outside the container (1).

In this example the transmitter (5) and detector (3) are placed on the outside of the environment, but they may also be placed inside the environment or elsewhere. In some examples wave guides, such as optical fibers, may be used to guide the light from the transmitter (5) and/or to the detector (3). In this example the environment (2) contains a fan (7) which is used to create a circulation of the gas inside the environment (2) to ensure that the leaked gas from any position of the container (1) reaches the light beam (4). When using an enclosure such as a chamber, it may be advantageous to have an as small volume as possible of the enclosure to make the alternation of the level (concentration) of the at least one gas larger for a certain leak flow.

The detected light is analysed in a control unit for determining an alternated level of the at least one gas in the environment. The control unit may be a computer, a microprocessor or an electronic circuit that could run code, or a software configured for analysing the light detected by the detector.

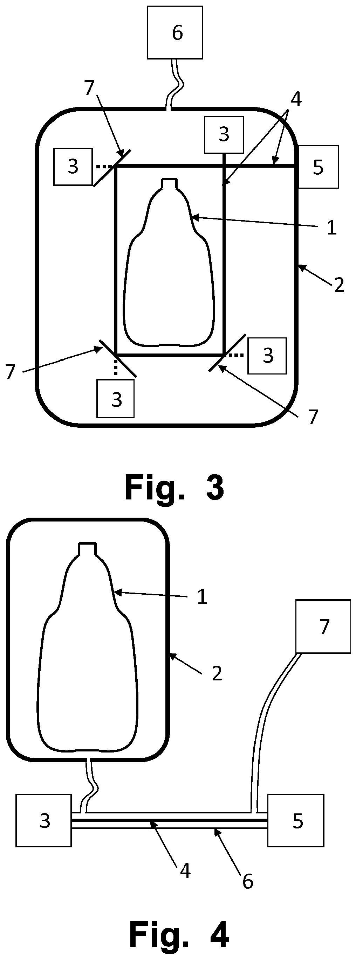

Fig. 3 shows another example where the container (1) is placed inside an environment (2), here illustrated as an enclosure, such as a chamber, through which a light beam (4) is transmitted from an optical transmitter (5) to at least two optical detector (3) using at least one semi-transparent mirrors (7). The use of at least two detectors (3) allow for detection of the position of the leak on the container (1). A vacuum pump (6) is connected to the environment in order to create a partial vacuum. The detected light is analysed by a control unit for determining an alternated level of the at least one gas in the environment. The control unit may be a computer, a microprocessor or an electronic circuit that could run code, or a software configured for analysing the light detected by the detector.

Fig. 4 shows another example where the container (1) is placed in an environment (2), here illustrated as an enclosure, such as a chamber, which is connected to a separate measurement volume (6), in this case made as a conduit, such as a tube or a pipe. A transmitter (5) sends a light beam (4) through the measurement volume (6) to the detector (3). The light may be transmitted longitudinally through the measurement volume (6), such as along the length of a conduit, or transvers through the measurement volume (6). A vacuum pump (7) is in this example connected to the opposite side of the measurement volume (6) compared to the environment (2). In this way gas is flowing from the chamber (2) to and through the measurement volume (6) when the vacuum pump (7) is pumping. Special attention may be taken to the pressure cycle, i.e., how the pressure is varying in time during the leak testing, in order to ensure that the at least one gas leaking out from the container (1) is reaching the light beam (4) faster than it would through gas diffusion.

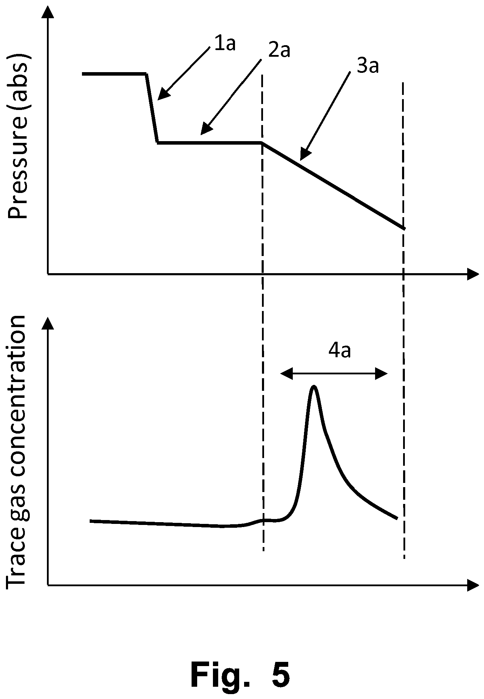

One example of such a pressure cycle is shown in Fig. 5. In this example the pressure is first quickly decreased (1a) to a certain level (2a) which is lower than that inside the container (1). The pressure is then kept constant for some time, for example one second, during which the at least one gas is leaking out from the container (1) and induces an increased concentration locally in the chamber (2). The pressure is then decreased further (3a) which creates a flow from the chamber (2) to the measurement volume (6). The exact time during the second pressure decrease (3a) may in some cases be used to determine where on the container (1) a leak is present.

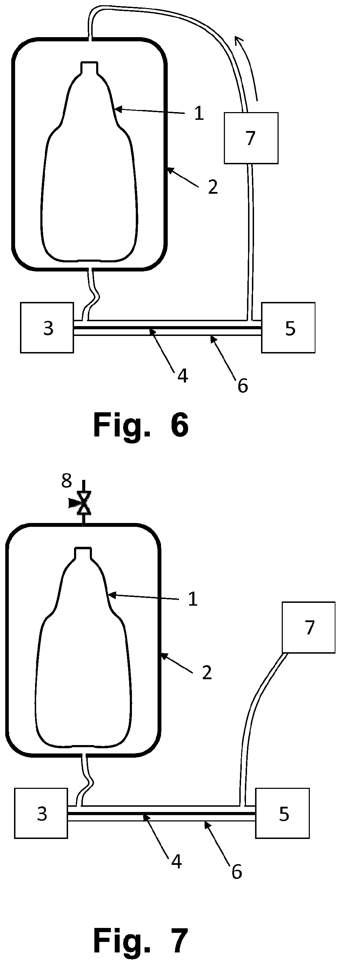

The examples illustrated in figs. 4 and 6 includes a control unit for analysing the detected light for determining an alternated level of the at least one gas in the environment. The control unit may be a computer, a microprocessor or an electronic circuit that could run code, or a software configured for analysing the light detected by the detector.

Fig. 6 shows another example where the container (1) is placed in an environment (2), here illustrated as an enclosure, such as a chamber, which is connected to a measurement volume (6) through which a transmitter (5) sends a light beam (4) to a detector (3). The light may be transmitted longitudinal through the measurement volume (6), such as along the length of a conduit, or transvers through the measurement volume (6).

In this example, a circulation through the measurement volume (6) and back into the environment (2) is made possible. A pump (7) which may be used for decreasing the pressure and/or circulating the gas is ensuring the gas leaking out from the container (1) reaches the light beam (4) .

The detected light is analysed using a control unit for determining an alternated level of the at least one gas in the environment. The control unit may be a computer, a microprocessor or an electronic circuit that could run code, or a software configured for analysing the light detected by the detector.

Fig. 7 shows an example where a valve (8) is placed in the environment (2), here illustrated as an enclosure, such as a chamber, for example at the opposite side compared to the connected measurement volume (8). The valve (8), which may be controlled by various means, may be opened to chosen amounts at chosen times to create a desired flow through the environment (2) and the measurement volume (6) to ensure that gas leaking out from the container (1) reaches the light beam (4). As an example, the pressure may first be decreased with the vacuum pump (7) while the valve (8) is closed. The pressure may then be kept constant during some time while gas is leaking out from the container (1) into the chamber. The valve (8) may then be opened so that gas is flowing through the chamber into the measurement volume (6) so that the increased level of the at least one gas may be detected by the light beam (4).

The detected light is analysed using a control unit for determining an alternated level of the at least one gas in the environment. The control unit may be a computer, a microprocessor or an electronic circuit that could run code, or a software configured for analysing the light detected by the detector.

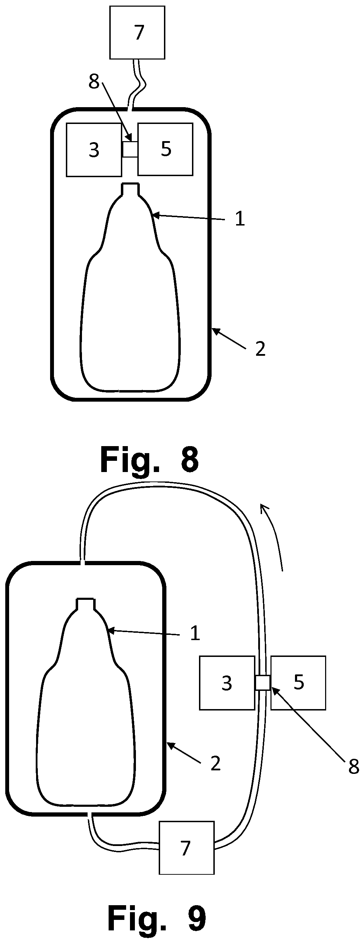

Fig. 8 shows an example where a multi-pass cell (8) is placed between the transmitter (5) and detector (3) to create a long optical path length in a small measurement volume in order to increase detection performance. In this example the transmitter (5) and detector (3) are placed inside the environment (2), here illustrated as an enclosure, such as a chamber, while in other examples the transmitter (5) and/or detector (3) may be placed on the outside of the chamber (2). In some examples the multi-pass cell may be mirror-based, for example of type Herriot, White or cavity, or of an integrating sphere type. In some examples the multi-pass cell may be a porous medium. A porous medium has the advantage of providing a long optical path-length while adding only a very small gas volume. In some examples optical fibers may be used to guide the light into, and/or out from the multi-pass cell.

Fig. 9 shows an example where a multi-pass cell is placed in a measurement volume outside of the main chamber (2) .

The above described systems and methods may be implemented as a stand-alone unit for manual bench-top measurements on single containers. Alternatively, may the above described systems and methods be implemented in-line for example in a filling machine after the contained has been sealed. The machine may be configured so that all containers passes through the environment where the measurement is performed. Alternatively, in some examples, samples are selected and measured on.

In the described systems and methods, the light source is a diode laser. wavelengths or wavelength range used for the light source is selected to match the absorption spectra of at least one species of the gas inside the container. The detector may be, for example, a photodiode, a photomultiplier, a CCD detector, a CMOS detector, a Si detector, an InGaAs detector, selected to be able to detect the wavelengths or wavelength range of the light source.

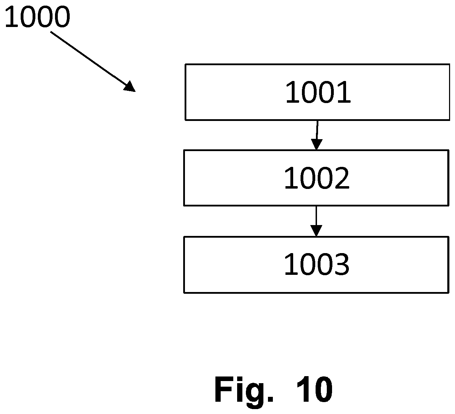

Fig. 10 is illustrating a method 1000, as defined in claim 2, for determining the integrity of a closed container containing at least one gas. The method includes placing 1001 the container in an environment with a lower absolute gas pressure than the pressure inside the container. Transmitting 1002 a light signal through a portion of the environment, or a volume connected to the environment outside the container using an optical transmitter and detecting at least a portion of the light using an optical detector. The optical transmitter and the detector are forming an optical sensor. The optical sensor being sensitive to at least one gas present in the container. Determining 1003, based on said transmitted light signal being detected, if a level of said at least one gas inside said container is altered in said environment or said connected volume.

It should be noted that in the examples described above, it is not necessary to measure the gas concentration in absolute values. In some examples, it is sufficient to measure a signal that is related to the gas concentration. In some examples, the spectroscopic signal is related to the gas pressure.

The present invention has been described above with reference to specific examples. However, the invention is defined by the appended patent claims.

The indefinite articles "a" and "an," as used herein in the specification and in the claims, unless clearly indicated to the contrary, should be understood to mean "at least one." The phrase "and/or," as used herein in the specification and in the claims, should be understood to mean "either or both" of the elements so conjoined, i.e., elements that are conjunctively present in some cases and disjunctively present in other cases.

## Claims

1. A system for determining the integrity of a container (1) containing at least one gas, said system comprises:
an environment (2) with a lower absolute gas pressure than the pressure inside the container (1);
wherein said environment (2) is an at least partially open enclosure or a closed enclosure; and wherein said at least partially open enclosure, or closed enclosure, is configured to have said container (1) positioned therein,
**characterized in that** the system further comprises a light source (5) and a detector (3), wherein the said light source (5) is arranged to transmit a light signal (4) to said detector (3) through said environment (2), but only outside of said container (1); wherein said light source (5) and said detector (3) are configured as an optical sensor using tunable diode laser absorption spectroscopy; and
a control unit for determining, based on said transmitted light signal (4) being detected, if a level of said at least one gas inside said container (1) is altered in said environment (2).

2. A method of determining the integrity of a container containing (1) at least one gas, said method comprising:
placing (1001) the container in an environment (2) with a lower absolute gas pressure than the pressure inside the container (1); wherein said environment (2) is an at least partially open enclosure or closed enclosure;
**characterized by** transmitting (1002) a light signal (4) through a portion of said environment (2), but only outside of said container (1) using an optical transmitter (5) and detecting at least a portion of the light signal (4);
wherein said optical transmitter (5) and said detector (3) forming an optical sensor sensitive to at least one gas present in said container (1), and wherein said sensor is using tunable diode laser absorption spectroscopy;
determining, based on said transmitted light signal (4) being detected, if a level of said at least one gas inside said container (1) is altered in said environment (2).

3. The method according to claim 2, where a partial vacuum is applied in said closed enclosure (2).

4. The method according to any of claims 2-3, where the size of the alternation of said level of said at least one gas is giving information about the size of said leakage of said container (1).

5. The method according to any of claims 2-4, where said light signal (4) is transmitted as a light beam through a compartment of said enclosure (2); said light beam can pass directly from said transmitter (5) to said detector (3), or it can be reflected in at least one mirror, or other optical component, before reaching said detector(3).

6. The method according to any of claims 2-5, where said light signal (4) is transmitted through a connected volume (6), for example a pipe, connected to said environment (2), and where a vacuum pumping device (7), for example a vacuum pump, is placed so that the gas extracted from said environment (2), as the pressure is decreased, is passing through said connected volume (6).

7. The method according to any of claims 2-5, where said light signal (4) is transmitted through a connected volume, for example a pipe, connected to said environment (2), and where a circulation system, for example a pump (7), circulates the gas through said environment (2) and said connected volume (6).

8. The method according to claim 6, where a valve (8) is placed in said environment (2), so as to, at chosen time periods, allow gas, for example ambient air, nitrogen, or compressed air, enter the environment (2) to create a flow through and from said environment (2) through said connected volume (6).

9. The method according to claim 8, where said valve (8), alone or in combination with at least one more valve, is controlled to create a pressure cycle where the pressure is first decreased to a fixed level with said valve closed, during which time a leaking said container will increase the concentration of said at least one gas locally in said environment (2); said valve is then fully or partially opened to allow a flow of gas from said environment (2) to and through said connected volume (6).

10. The method according to claims 7 or 8, where the exact time when an altered concentration of said at least one gas is detected in said connected volume (6), after said valve (8) is opened, gives information about the position of said leakage in said container (1) .

11. The method according to claims 5 or 6, where the pressure cycle is specially designed so that said leakage from said container (1) is forced to reach the laser beam (4).

12. The method according to claim 11, where the exact time when an altered concentration of said at least one gas is detected in said connected volume (6), during the pressure cycle, gives information about the position of said leakage in said container (1).

13. The method according to any of claims 2-6, where multiple detectors (3) are placed at different positions around said container (1), and are used in combination with at least one transmitter (5).

14. The method according to claim 13, where a single transmitter (5) is used and said laser beam (4) is folded around said container (1) using semi-transparent mirrors and said detector (3) is placed behind at least one of said semi-transparent mirror and at the termination of said laser beam (4).

## Patentansprüche

1. Ein System zur Bestimmung der Unversehrtheit eines Containers (1), der mindestens ein Gas enthält, wobei besagtes System Folgendes umfasst:
eine Umgebung (2) mit einem geringeren absoluten Gasdruck als der Druck im Container (1),
wobei besagte Umgebung (2) ein mindestens teilweise offenes Gehäuse oder ein geschlossenes Gehäuse ist und
wobei besagtes mindestens eine offene Gehäuse oder geschlossene Gehäuse so ausgelegt ist, dass der Container (1) darin untergebracht ist,
**dadurch gekennzeichnet, dass** das System weiterhin eine Lichtquelle (5) und einen Sensor (3) umfasst, wobei besagte Lichtquelle (5) so angeordnet ist, dass sie ein Lichtsignal (4) an besagten Sensor (3) durch besagte Umgebung (2) ausgibt, aber nur außerhalb des Containers (1), wobei besagte Lichtquelle (5) und besagter Sensor (3) als optischer Sensor unter Verwendung einer Absorptionsspektroskopie mittels durchstimmbarer Laserdioden (TDLAS) ausgelegt sind, und
eine Steuereinheit zur Bestimmung auf der Grundlage der Erfassung des besagten übermittelten Lichtsignals (4), ob sich ein Niveau des besagten mindestens einen Gases innerhalb besagten Containers (1) in besagter Umgebung (2) geändert hat.

2. Ein Verfahren zur Bestimmung der Unversehrtheit eines Containers (1), der mindestens ein Gas enthält, wobei besagtes Verfahren Folgendes umfasst:
das Positionieren (1001) des Containers in einer Umgebung (2) mit einem geringeren absoluten Gasdruck als der Druck im Container (1), wobei besagte Umgebung (2) ein mindestens teilweise offenes Gehäuse oder ein geschlossenes Gehäuse ist,
**gekennzeichnet durch** die Übermittlung (1002) eines Lichtsignals (4) durch einen Abschnitt besagter Umgebung (2), jedoch nur außerhalb besagten Containers (1) unter Verwendung eines optischen Senders (5) und Erfassen mindestens eines Abschnitts des Lichtsignals (4),
wobei besagter optischer Sender (5) und besagter Sensor (3) einen optischen Sensor bilden, der auf mindestens ein in besagtem Container (1) vorhandenes Gas reagiert und wobei besagter Sensor Absorptionsspektroskopie mittels durchstimmbarer Laserdioden verwendet,
die Bestimmung auf der Grundlage der Erfassung des besagten übermittelten Lichtsignals (4), ob sich ein Niveau des besagten mindestens einen Gases innerhalb besagten Containers (1) in besagter Umgebung (2) geändert hat.

3. Das Verfahren gemäß Anspruch 2, wobei ein Teilvakuum in besagtem geschlossenem Gehäuse erzeugt wird.

4. Das Verfahren gemäß einem der Ansprüche 2 bis 3, wobei die Größe der Änderung des besagten Niveaus des besagten mindestens einen Gases Aufschluss über die Größe des besagten Lecks des besagten Containers (1) gibt.

5. Das Verfahren gemäß einem der Ansprüche 2 bis 4, wobei besagtes Lichtsignal (4) als ein Lichtstrahl durch eine Kammer des besagten Gehäuses (2) gesendet wird, wobei besagter Lichtstrahl direkt von besagtem Sender (5) zu besagtem Sensor (3) gelangen kann oder von mindestens einem Spiegel oder einer anderen optischen Komponente reflektiert wird, bevor er auf besagten Sensor (3) trifft.

6. Das Verfahren gemäß einem der Ansprüche 2 bis 5, wobei besagtes Lichtsignal (4) über ein angeschlossenes Volumen (6) übertragen wird, zum Beispiel ein Rohr, das an besagte Umgebung (2) angeschlossen ist, und wobei eine Vakuumpumpenvorrichtung (7), zum Beispiel eine Vakuumpumpe, so platziert wird, dass das aus besagter Umgebung (2) abgezogene Gas bei sinkendem Druck durch besagtes angeschlossenes Volumen (6) strömt.

7. Das Verfahren gemäß einem der Ansprüche 2 bis 5, wobei besagtes Lichtsignal (4) über ein angeschlossenes Volumen (6) übertragen wird, zum Beispiel ein Rohr, das an besagte Umgebung (2) angeschlossen ist, und wobei eine Umwälzsystem, zum Beispiel eine Pumpe (7), so platziert wird, dass das Gas durch besagte Umgebung (2) und besagtes angeschlossenes Volumen (6) strömt.

8. Das Verfahren gemäß Anspruch 6, wobei ein Ventil (8) in besagter Umgebung (2) platziert wird, so dass zu bestimmten Zeiträumen Gas, zum Beispiel Umgebungsluft, Stickstoff oder Druckluft, in die Umgebung strömen kann, um einen Strom durch und von besagter Umgebung (2) durch besagtes angeschlossenes Volumen (6) zu erzeugen.

9. Das Verfahren gemäß Anspruch 8, wobei besagtes Ventil (8) allein oder in Kombination mit mindestens einem weiteren Ventil so gesteuert wird, dass es einen Druckzyklus bildet, in dem der Druck zuerst auf ein festes Niveau bei geschlossenem Ventil abgesenkt wird, ein Zeitraum, in dem ein Leck in besagtem Container die Konzentration des besagten einen Gases lokal in besagter Umgebung (2) erhöhen wird, und besagtes Ventil dann ganz oder teilweise geöffnet wird, um einen Gasstrom von besagter Umgebung (2) zu und durch besagtes Volumen (6) zu erlauben.

10. Das Verfahren gemäß Anspruch 7 oder 8, wobei die genaue Zeit, wann eine geänderte Konzentration des besagten mindestens einen Gases in besagtem angeschlossenen Volumen (6) nach Öffnen besagten Ventils (8) festgestellt wird, Aufschluss über die Position besagten Lecks in besagtem Container (1) gibt.

11. Das Verfahren gemäß Anspruch 5 oder 6, wobei der Druckzyklus speziell so ausgelegt ist, dass besagtes Leck in besagtem Container (1) zwangsläufig auf den Laserstrahl (4) trifft.

12. Das Verfahren gemäß Anspruch 11, wobei die genaue Zeit, wann eine geänderte Konzentration des besagten mindestens einen Gases in besagtem angeschlossenen Volumen (6) während des Druckzyklus festgestellt wird, Aufschluss über die Position besagten Lecks in besagtem Container (1) gibt.

13. Das Verfahren nach einem der Ansprüche 2 bis 6, wobei mehrere Sensoren (3) in verschiedenen Positionen rund um besagten Container (1) aufgestellt und in Kombination mit mindestens einem Sender (5) verwendet werden.

14. Das Verfahren gemäß Anspruch 13, wobei ein einzelner Sender (5) verwendet, besagter Laserstrahl (4) über halbtransparente Spiegel um besagten Container (1) geleitet und besagter Sensor (3) hinter mindestens einem besagter halbtransparenter Spiegel sowie am Ende des besagten Laserstrahls (4) positioniert wird.

## Revendications

1. Système de détermination de l'intégrité d'un récipient (1) contenant au moins un gaz, ledit système comprenant :
un environnement (2) présentant une pression gazeuse absolue inférieure à la pression à l'intérieur du récipient (1) ;
où ledit environnement (2) est une enceinte au moins en partie ouverte ou une enceinte fermée ; et où ladite enceinte au moins en partie ouverte, ou enceinte fermée, est configurée pour avoir ledit récipient (1) positionné en son sein,
**caractérisé en ce que** le système comprend en outre une source de lumière (5) et un détecteur (3), où ladite source de lumière (5) est agencée pour transmettre un signal lumineux (4) audit détecteur (3) à travers ledit environnement (2), mais uniquement à l'extérieur dudit récipient (1) ; où ladite source de lumière (5) et ledit détecteur (3) sont configurés comme un capteur optique utilisant la spectroscopie d'absorption laser à diode accordable ; et
une unité de contrôle destinée à déterminer, sur la base dudit signal lumineux transmis (4) qui est détecté, si un niveau dudit au moins un gaz à l'intérieur dudit récipient (1) est modifié dans ledit environnement (2).

2. Procédé de détermination de l'intégrité d'un récipient (1) contenant au moins un gaz, ledit procédé comprenant :
le fait de placer (1001) le récipient dans un environnement (2) présentant une pression gazeuse absolue inférieure à la pression à l'intérieur du récipient (1) ; où ledit environnement (2) est une enceinte au moins en partie ouverte ou une enceinte fermée ;
**caractérisé par** le fait de transmettre (1002) un signal lumineux (4) à travers une partie dudit environnement (2), mais uniquement à l'extérieur dudit récipient (1) en utilisant un émetteur optique (5) et de détecter au moins une partie du signal lumineux (4) ;
où ledit émetteur optique (5) et ledit détecteur (3) forment un capteur optique sensible à au moins un gaz présent dans ledit récipient (1), et où ledit capteur utilise la spectroscopie d'absorption laser à diode accordable ;
le fait de déterminer, sur la base dudit signal lumineux transmis (4) qui est détecté, si un niveau dudit au moins un gaz à l'intérieur dudit récipient (1) est modifié dans ledit environnement (2).

3. Procédé selon la revendication 2, où un vide partiel est appliqué dans ladite enceinte fermée (2).

4. Procédé selon l'une quelconque des revendications 2 et 3, où l'ampleur de la modification dudit niveau dudit au moins un gaz donne une information sur l'ampleur de ladite fuite dudit récipient (1).

5. Procédé selon l'une quelconque des revendications 2 à 4, où ledit signal lumineux (4) est transmis sous la forme d'un faisceau lumineux à travers un compartiment de ladite enceinte (2) ; ledit faisceau lumineux peut passer directement dudit émetteur (5) audit détecteur (3), ou il peut être réfléchi sur au moins un miroir, ou un autre composant optique, avant d'atteindre ledit détecteur (3).

6. Procédé selon l'une quelconque des revendications 2 à 5, où ledit signal lumineux (4) est transmis à travers un volume raccordé (6), par exemple une canalisation, raccordé audit environnement (2), et où un dispositif de pompage à vide (7), par exemple une pompe à vide, est placé de sorte que le gaz extrait dudit environnement (2), à mesure que la pression diminue, passe à travers ledit volume raccordé (6).

7. Procédé selon l'une quelconque des revendications 2 à 5, où ledit signal lumineux (4) est transmis à travers un volume raccordé (6), par exemple une canalisation, raccordé audit environnement (2), et où un système de circulation, par exemple une pompe (7), fait circuler le gaz à travers ledit environnement (2) et ledit volume raccordé (6).

8. Procédé selon la revendication 6, où une vanne (8) est placée dans ledit environnement (2), de sorte à, à des intervalles de temps choisis, laisser du gaz, par exemple de l'air ambiant, de l'azote, ou de l'air comprimé, entrer dans l'environnement (2) afin de créer un écoulement à travers et depuis ledit environnement (2) à travers ledit volume raccordé (6).

9. Procédé selon la revendication 8, où ladite vanne (8), seule ou en association avec au moins une autre vanne, est commandée afin de créer un cycle de pression où la pression est tout d'abord abaissée à un niveau fixe avec ladite vanne fermée, période au cours de laquelle une fuite dudit récipient augmentera la concentration dudit au moins un gaz localement dans ledit environnement (2) ; ladite vanne est ensuite pleinement ou partiellement ouverte pour permettre un écoulement de gaz depuis ledit environnement (2) vers et travers ledit volume raccordé (6).

10. Procédé selon les revendications 7 ou 8, où l'instant exact auquel une concentration modifiée dudit au moins un gaz est détectée dans ledit volume raccordé (6), après que ladite vanne (8) a été ouverte, donne une information sur la position de ladite fuite dans ledit récipient (1).

11. Procédé selon les revendications 5 ou 6, où le cycle de pression est spécialement conçu de sorte que ladite fuite dudit récipient (1) est forcée d'atteindre le faisceau laser (4).

12. Procédé selon la revendication 11, où l'instant exact auquel une concentration modifiée dudit au moins un gaz est détectée dans ledit volume raccordé (6), au cours du cycle de pression, donne une information sur la position de ladite fuite dans ledit récipient (1).

13. Procédé selon l'une quelconque des revendications 2 à 6, où de multiples détecteurs (3) sont placés à différentes positions autour dudit récipient (1), et sont utilisés en association avec au moins un émetteur (5).

14. Procédé selon la revendication 13, où un seul émetteur (5) est utilisé et ledit faisceau laser (4) est replié autour dudit récipient (1) en utilisant des miroirs semi-transparents et ledit détecteur (3) est placé derrière au moins l'un desdits miroirs semi-transparents et à la fin dudit faisceau laser (4).
